# EUROPÄISCHE PATENTSCHRIFT

(11) **EP 1 585 000 B1**
(45) Veröffentlichungstag und Bekanntmachung des Hinweises auf die Patenterteilung: **10.09.2008**
(21) Anmeldenummer: 04008517.7
(22) Anmeldetag: 08.04.2004
(51) Int. Cl.: G05B 19/418

(54) **Bilderfassungsvorrichtung für Automatisierungsgeräte**
Image capturing apparatus for process automation devices
Dispositif d'acquisition d'image pour les appareils d'automatisation

(43) Veröffentlichungstag der Anmeldung: 12.10.2005
(73) Patentinhaber: FESTO AG & Co. KG, 73734 Esslingen (DE)
(72) Erfinder: Hufnagl, Herbert, Dr., 73730 Esslingen (DE); Bauer, Heino, 73760 Ostfildern (DE)
(74) Vertreter: Bregenzer, Michael

(56) Entgegenhaltungen:
- WO-A-91/17021
- DE-A- 3 031 507
- US-A- 6 061 603
- US-A1- 2002 186 302

## Beschreibung

Die Erfindung betrifft eine Bilderfassungsvorrichtung in Gestalt einer Kamera zur Erfassung von Bilddaten eines durch mindestens einen Aktor entlang einer Bewegungsbahn bewegten Objekts. Die Erfindung betrifft ferner ein Steuermodul für eine derartige Bilderfassungsvorrichtung.

Die DE 30 31 507 A1 zeigt eine Bilderfassungsanlage, bei der eine Bildverarbeitungseinrichtung mit einer Fernsehkamera, die einen optoelektronischen Sensor enthält, gekoppelt ist. Die von der Fernsehkamera separate Bildverarbeitungseinrichtung führt einen Soll-Istwert-Vergleich durch, um einen Manipulator zur Handhabung eines Werkstückes zu steuern.

Aus der US 2002/0186302 A1 geht eine Steuerungsanlage hervor, bei der eine programmierbare Logiksteuerung an eine Kamera Fragenachrichten sendet und von dieser Antwortnachrichten erhält, um eine Vorrichtung, die beispielsweise ein Förderband enthält, zu steuern. Die Kamera ist beispielsweise in der Lage, eine Position zu bestimmen.

Die WO 91/17021 zeigt eine Vorrichtung zur Produktion von Schuhen mit einem Computer, an den ein CCD Sensor angeschlossen ist und der eine programmierbare logische Steuerungsvorrichtung zur Steuerung einer Maschine zur Schuhherstellung steuert.

Eine Bilderfassungsvorrichtung gemäß der DE 100 33 366 A1 in Gestalt einer Kamera ermöglicht die Erfassung optischer Daten eines Objekts, das durch eine Handhabungsvorrichtung mit zwei Aktoren bewegt wird. Die Bilderfassungsvorrichtung übermittelt Daten an einen Steuerrechner, der die Handhabungsvorrichtung mit den beiden Aktoren steuert.

Die bekannten Handhabungssysteme lassen sich aus modularen, standardisierten Komponenten aufbauen. Allerdings ist es nachteilig, dass mehrere, aufeinander abzustimmende Komponenten notwendig sind.

Es ist daher die Aufgabe der vorliegenden Erfindung, eine Bilderfassungsvorrichtung bereit zu stellen, die bei kompakter Bauweise flexibel Steuerungs- und Bildverarbeitungsaufgaben erfüllt.

Diese Aufgabe wird durch eine Bilderfassungsvorrichtung gemäß der technischen Lehre des Anspruchs 1 gelöst.

Die erfindungsgemäße Bilderfassungsvorrichtung bzw. ein entsprechend ausgestaltetes Steuermodul erfüllen zwei Aufgaben: Erfassung und zweckmäßigerweise Analyse von Bilddaten und ferner die Steuerung eines oder mehrerer Aktoren. Der Aktor bzw. die Aktoren bilden zweckmäßigerweise einen Bestandteil einer Handhabungsvorrichtung, die durch die Bilderfassungsvorrichtung gesteuert wird. Erfindungsgemäß verkörpert die Bilderfassungsvorrichtung in Gestalt einer Kamera zusätzlich eine Steuerung für einen oder mehrere Aktoren, das heißt für eine Aktoranordnung. Im Videobereich werden üblicherweise 50 oder 60 Bilder pro Sekunde erfasst. Die erfindungsgemäße Bilderfassungsvorrichtung erfasst in einer bevorzugten Ausführungsform als eine Hochgeschwindigkeitskamera vorzugsweise 200 bis 400 Bilder pro Sekunde, wobei auch Ausführungsformen mit größerer Leistungsfähigkeit, beispielsweise 1.000 Bilder pro Sekunde, oder kleinerer Leistungsfähigkeit mit mehr als etwa 50-60 Einzelbildern pro Sekunde, beispielsweise 100 Bilder pro Sekunde, ohne weiteres möglich sind.

Die erfindungsgemäße Bilderfassungsvorrichtung verfügt dementsprechend über einen leistungsfähigen Bildverarbeitungsprozessor, der zusätzlich die Steuerungsaufgaben erfüllt. Die Bilderfassungsvorrichtung arbeitet zweckmäßigerweise in einer zur Bewegungsgeschwindigkeit des mindestens einen Aktors korrelierenden Geschwindigkeit, insbesondere in Echtzeit. Die Steuermittel sind gegenüber den Bilddaten verarbeitenden Mitteln vorteilhafterweise priorisiert.

Die Steuermittel sind über eine Programmier-Schnittstelle programmierbar, wobei mindestens ein Bewegungsablauf des Aktors programmierbar ist. Die Steuermittel arbeiten zweckmäßigerweise als eine Ablauf-Steuerung. Für die Programmierung ist eine standardisierte Programmiersprache bevorzugt, beispielsweise gemäß IEC-11631.

Die Bilderfassungsvorrichtung ermöglicht vorteilhafterweise eine hochdynamische Auswertung von Bilddaten und erzeugt auf diesem Weg zweckmäßigerweise Bildanalysedaten. Die Bildanalysedaten setzt die Bilderfassungsvorrichtung für die Steuerungsaufgaben ein, das heißt sie steuert den oder die Aktoren anhand der Bildanalysedaten. Es versteht sich, dass die Erfindung auch eine Bilderfassungsvorrichtung umfasst, die eine geringere Arbeitsgeschwindigkeit bereitstellt.

Weitere vorteilhafte Ausgestaltungen der Erfindung ergeben sich aus den abhängigen Ansprüchen sowie aus der Beschreibung.

Die Steuerungsmittel sind vorteilhafterweise zur Erfassung von durch den mindestens einen Aktor und/oder durch mindestens einen Sensor gemeldete Rückmeldungen ausgestaltet, in denen beispielsweise eine Relativposition eines Aktorglieds des Aktors oder dergleichen gemeldet wird.

Ein Aufbau der Steuermittel als eine speicherprogrammierbare Steuerung (SPS) ist zweckmäßig. Es ist auch möglich, dass die Steuermittel eine speicherprogrammierbare Steuerung sozusagen emulieren. Die Steuermittel arbeiten dann entsprechend einer speicherprogrammierbaren Steuerung, das heißt beispielsweise die Programmierung der Steuermittel erfolgt in der Art einer speicherprogrammierbaren Steuerung.

Die Steuermittel kommunizieren mit dem mindestens einen Aktor direkt oder indirekt. Die direkte Kommunikation kann beispielsweise über Ausgabeschnittstellen, z.B. eine Busschnittstelle oder dergleichen, erfolgen. Bei der indirekten Kommunikation ist beispielsweise ein separates Eingabe-Ausgabemodul vorhanden, das als eine unterlagerte Baueinheit ausgeführt ist. Die Bilderfassungsvorrichtung und das Eingabe-Ausgabemodul sind zweckmäßigerweise über eine Bus-Verbindung miteinander verbunden.

Weitere Schnittstellenmittel sind bei der Bilderfassungsvorrichtung zweckmäßig. Beispielsweise enthält sie Web-Schnittstellenmittel zur Ausgabe von Daten in einer Seitenbeschreibungssprache. Die Bilderfassungsvorrichtung bildet zweckmäßigerweise eine Art Web-Server, so dass sie mittels eines Internet-Browsers bedienbar ist. An der Web-Schnittstelle kann die Bilderfassungsvorrichtung beispielsweise Visualisierungsdaten ausgeben und/oder Programmierbefehle zur Programmierung der Steuermittel empfangen.

Nachfolgend wird die Erfindung anhand eines Ausführungsbeispiels unter Bezugnahme auf die Zeichnung näher erläutert. Es zeigen:
- Figur 1: ein Handhabungssystem, bei dem eine erfindungsgemäße Bilderfassungsvorrichtung zwei Handhabungsvorrichtungen steuert,
- Figur 2: eine Rückseite der Bilderfassungsvorrichtung gemäß Figur 1,
- Figur 3: eine schematische Ansicht der Bilderfassungsvorrichtung gemäß Figur 1,
- Figur 4: schematische geometrische Bewegungsbahnverläufe eines durch die Handhabungsvorrichtungen gemäß Figur 1 bewegten Objekts sowie ein zugeordnetes geometrisches Toleranzband,
- Figur 5: schematische Weg-Zeit-Verläufe von Bewegungsbahnen, die ein durch die Handhabungsvorrichtungen gemäß Figur 1 bewegtes Objekt durchläuft, sowie ein zugeordnetes geometrisches Toleranzband und
- Figur 6: schematische zeitabhängige Geschwindigkeitsverläufe eines durch die Handhabungsvorrichtungen gemäß Figur 1 bewegten Objektes sowie zwei zugeordnete Toleranzbänder.

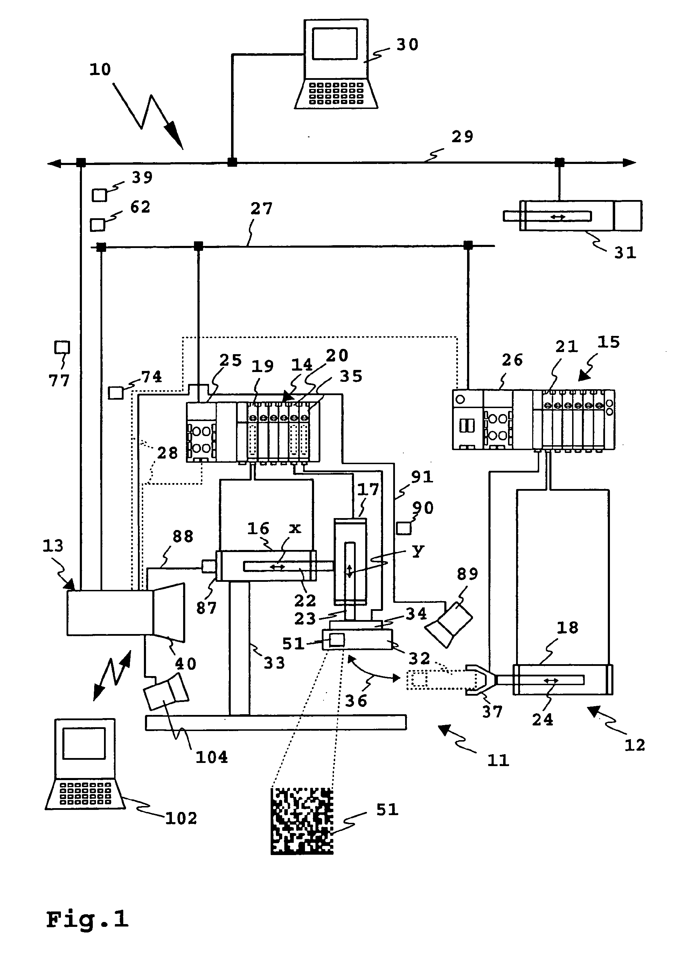

Ein in Figur 1 gezeigtes Handhabungssystem 10 enthält Handhabungsvorrichtung 11, 12, die durch eine Bilderfassungsvorrichtung 13 gesteuert werden. Ein zentraler Steuer-Rechner 30 steuert die Bilderfassungsvorrichtung 13 sowie einen Aktor 31 über einen zentralen Steuerbus 29, beispielsweise einen Feldbus, einen Ethernet-Bus oder dergleichen. An den Steuerbus 29 können auch weitere Aktoranordnungen, unterlagerte speicherprogrammierbare Steuerungen oder dergleichen angeschlossen sein.

Die Bilderfassungsvorrichtung 13 bildet eine lokale Steuerung für die Handhabungsvorrichtungen 11, 12, bei denen eine Ventilbatterie 14, Aktoren 16, 17 und eine Ventilbatterie 15 einen Aktor 18 ansteuert. An die Ventilbatterien 14, 15 können auch weitere, in der Figur nicht dargestellte Aktoren angeschlossen sein. Die Ventilbatterien 14, 15 arbeiten vorliegend auf fluidtechnischer, insbesondere pneumatischer Basis, das heißt sie beaufschlagen die Aktoren 16, 17, 18 mit Druckluft, um deren Aktorglieder 22, 23, 24 zu betätigen.

Die Bilderfassungsvorrichtung 13 steuert die Aktoren 16 bis 18 indirekt über die Ventilbatterien 14, 15, insbesondere über Steuermodule 25, 26 der Ventilbatterien 14, 15, mit denen die Bilderfassungsvorrichtung 13 über einen Feldbus 27, beispielsweise einen ASi-Bus (actuator sensor interface) oder einen CAN-Bus (Controller Area Network), verbunden ist. Die Steuermodule 25, 26 bilden lokale Eingabe-Ausgabemodule zur Ansteuerung der Aktoren 16, 17 und 18. Die Steuermodule 25, 26 steuern Ventilmodule, beispielsweise Ventilmodule 19, 20, 21 an, an die die Aktoren 16, 17, 18 mittels Fluid-Leitungen, z.B. Druckluftleitungen, angeschlossen sind.

Es versteht sich, dass die Bilderfassungsvorrichtung 13 auch zur direkten Ansteuerung von Aktoren, insbesondere von elektrischen Aktoren, ausgestaltet sein kann, wobei dann keine zwischengeschalteten Eingabe-Ausgabe-Module notwendig sind. Beispielsweise steuert die Bilderfassungsvorrichtung 13 eine von ihr separate Beleuchtungseinrichtung 104, z.B. eine Lampe, direkt an und schaltet diese helligkeitsabhängig ein und aus.

Anstelle der Bus-Verbindung zwischen der Bilderfassungsvorrichtung 13 und den Steuermodulen 25, 26 können auch direkte Verbindungen in Gestalt von Leitungen 28 zwischen der Bilderfassungsvorrichtung 13 und den Steuermodulen 25, 26 vorgesehen sein. Es versteht sich, dass auch drahtlose Verbindungen, beispielsweise über ein Wireless-LAN, möglich sind.

Die Bilderfassungsvorrichtung 13 ist als eine Kamera ausgestaltet und weist ein Objektiv 40 auf. Ferner empfängt die Bilderfassungsvorrichtung 13 von einer separaten Kamera 89 über eine Leitung 91 Bilddaten 90.

Die Handhabungsvorrichtungen 11, 12 sind zur Handhabung von Objekten vorgesehen, beispielsweise Werkstücken, Werkzeugen oder dergleichen. Beispielhaft ist ein Objekt 32, das in der Zeichnung von der Handhabungsvorrichtung 11 bewegt wird, dargestellt. Die Handhabungsvorrichtung 11 übergibt das Objekt 32 der Handhabungsvorrichtung 12 und bewegt das Objekt beispielsweise entlang einer schematisch dargestellten Bewegungsbahn 36.

Die Handhabungsvorrichtungen 11, 12 sind Mehrachs-Handhabungsvorrichtungen, die in der Zeichnung schematisch dargestellt sind. Bei der Handhabungsvorrichtung 11 ist der Aktor 16 horizontal orientiert an einem Ständer 33 angeordnet. Bei entsprechender Druckluftbeaufschlagung durch das Ventilmodul 19 bewegt sich das Aktorglied 22, beispielsweise eine Kolbenstange die an einem pneumatischen Kolben angeordnet ist, aus einem Gehäuse des Aktors 16 heraus bzw. in dieses hinein. Das Aktorglied 22 ist in X-Richtung betätigbar.

Am freien Ende des Aktorglieds 22 ist der Aktor 17 angeordnet. Wie der Aktor 16 ist auch der Aktor 17 ein pneumatischer Linear-Antrieb. Der Aktor 17 ist vertikal orientiert, das heißt, bei Betätigung durch das Ventilmodul 20 führt das Aktorglied 23, beispielsweise eine Kolbenstange, eine Bewegung in Y-Richtung aus, das heißt die Kolbenstange 23 bewegt sich nach oben oder unten.

Am unteren, freien Ende des Aktorglieds 23 befindet sich eine fluidtechnische Halteeinrichtung in Gestalt eines Saugers 34, der bei entsprechender Betätigung durch das Ventilmodul 35 das Objekt 32 ansaugt bzw. abstößt. Das Ventilmodul 35 ist mit einer nicht dargestellten Vakuumerzeugungseinrichtung verbunden. Durch entsprechen synchronisierte Betätigung der Aktoren 16, 17 bzw. des Saugers 32 kann die Handhabungsvorrichtung 11 das Objekt 32 positionieren, beispielsweise der Handhabungsvorrichtung 12 übergeben.

Ein Greifer 37, der beispielsweise elektrisch oder pneumatisch betätigbar ist, ergreift das Objekt 32. Der Greifer 37 ist am vorderen, freien Ende des Aktorglieds angeordnet. Der Aktor 18 ist ebenfalls horizontal orientiert, das heißt das Aktorglied 24, z.B. eine Kolbenstange, ist in X-Richtung beweglich bzw. antreibbar.

Beim Ausführungsbeispiel sind pneumatische Linear-Antriebe dargestellt. Es versteht sich, dass auch andere Antriebsvarianten, beispielsweise elektrische Antriebe, Drehantriebe oder dergleichen möglich sind.

Die Bilderfassungsvorrichtung 13 ist durch eine überlagerte Steuerungsvorrichtung in Gestalt des Steuerrechners 30 steuerbar. Der Steuerrechner 30 sendet beispielsweise einen Steuerbefehl 39, um die Bilderfassungsvorrichtung 13 zur Bewegung des Objekts 32 entlang der Bewegungsbahn 36 anzuweisen. Die Ausführung des Steuerbefehls 39 quittiert die Bilderfassungsvorrichtung 13 beispielsweise mit einer Quittiermeldung 62.

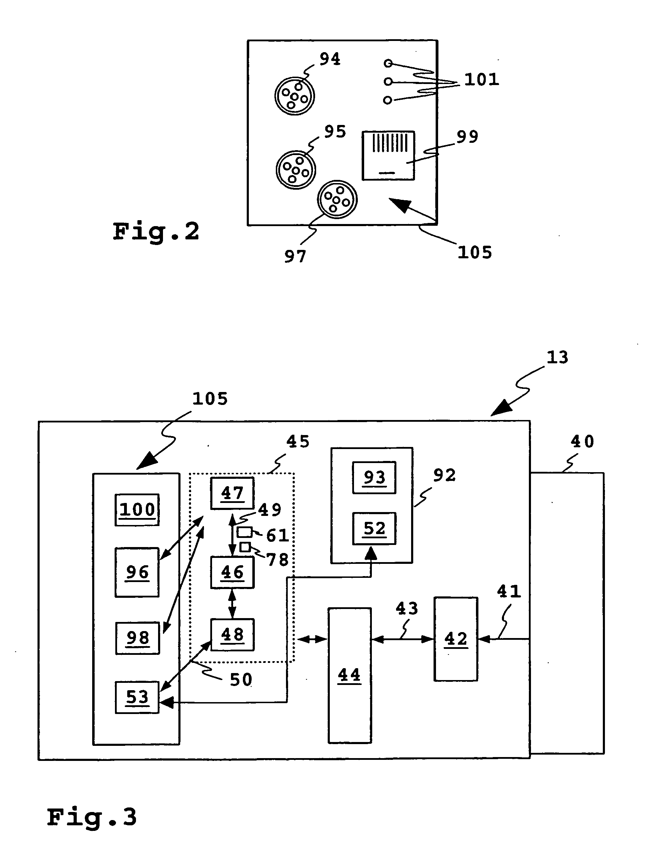

Die Bilderfassungsvorrichtung 13 ist in Figur 3 schematisch dargestellt.

Ein Bildwandler 42 wandelt durch das Objekt 40 einfallendes Licht 41 in Bilddaten 43, vorliegend digitale Bilddaten. Es versteht sich, dass auch analoge Bilddaten 43 möglich sind. Ein Prozessor 44 führt anhand der Bilddaten 43 verschiedene Steuerungsaufgaben durch, die später noch näher erläutert werden. Der Prozessor 44 ist zur Analyse von Bilddaten und zusätzlich zur Durchführung von Steuerungsaufgaben ausgestaltet. Der Prozessor führt Programmcode von Programmmodulen 45 aus, die beispielsweise ein Analysemodul 46 zur Analyse der Bilddaten 43, 90, ein Steuermodul 47 zur Steuerung der Handhabungsvorrichtungen 11, 12 und ein Visualisierungsmodul 48 zur Visualisierung von Bilddaten, von Steuerungsfunktionen oder dergleichen enthalten.

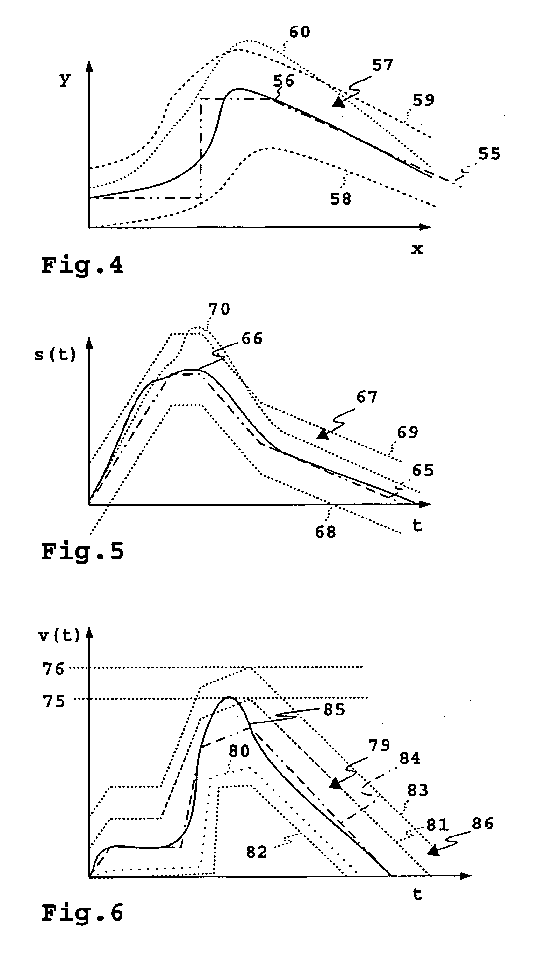

Das Steuermodul 47 steuert die Aktoren 16, 17, 18 anhand des Steuerbefehls 39 des Steuerrechners 30 sowie anhand von Parameterdaten 52, die einen Bewegungsablauf der Aktoren 16, 17, 18 repräsentieren. Ferner wertet das Steuermodul 47 Bildanalysedaten 49 aus, die das Analysemodul 46 anhand der Bilddaten 43, 90 erzeugt. Die Bildanalysedaten 49 signalisieren beispielsweise eine korrekte oder eine nicht korrekte Bewegung des Objekts 32 durch die Handhabungsvorrichtungen 11, 12. Die Parameterdaten 52 enthalten beispielsweise einen idealen geometrischen Wegverlauf 55 des Objekts 32 entlang der Bewegungsbahn 36, der in Figur 4 dargestellt ist. Ferner kann in den Parameterdaten 52 auch ein zeitabhängiger, idealer Wegverlauf 65 gemäß Figur 5 und/oder ein zeitabhängiger idealer Geschwindigkeitsverlauf 84 gemäß Figur 6 parametriert sein.

Das Steuermodul 47 bildet Steuermittel zur Steuerung der Aktoren 16 bis 18. Das Analysemodul 46 bildet Erfassungsmittel zur Erfassung und vorliegend zur Analyse von Bilddaten, beispielsweise der Bilddaten 43 und/oder 90. Das Steuermodul 47 und das Analysemodul 46 wirken in einer vorteilhaften, nachfolgend beschriebenen Weise zusammen:

Das Analysemodul 46 analysiert die Bilddaten 43, 90 in geometrischer Hinsicht, zusätzlich aber auch in dynamischer Hinsicht. Das Analysemodul 46 analysiert die Bilddaten 43 an mehreren Positionen der Bewegungsbahn 36, insbesondere entlang mindestens eines Teilabschnitts der Bewegungsbahn 36. Idealerweise bewegen die Handhabungsvorrichtungen 11, 12 das Objekt 32 entlang dem idealen geometrischen Verlauf 55 gemäß Figur 4. In der Praxis jedoch überlagern sich die Bewegungen der Aktoren 16 bis 18, so dass sich ein typischer geometrischer Verlauf 56 einstellt. Der Verlauf 56 befindet sich innerhalb eines geometrischen Toleranzbandes 57, das durch einen unteren und einen oberen Grenzverlauf 58, 59 begrenzt ist. Wenn die Aktoren 16 bis 18 das Objekt 32 so bewegen, dass beispielsweise ein geometrischer Fehler-Verlauf 60 durchlaufen wird, der sich außerhalb des Toleranzbandes 57 befindet, sendet das Analysemodul 46 eine Warninformation 61 an das Steuermodul 47. Das Steuermodul 47 kann dann beispielsweise eine Warnmeldung an den Steuerrechner 30 senden und/oder die Aktoren 16, 17 und/oder 18 zu einer korrigierten, dem idealen geometrischen Wegverlauf 55 angenäherten Bewegung des Objekts 32 ansteuern. Das geometrische Toleranzband 57 ist sozusagen ein Warn-Toleranzband.

Das Analysemodul 46 ist dazu ausgestaltet, das Objekt 32 sowie gegebenenfalls weitere, in der Figur nicht dargestellte Objekte zu identifizieren, wozu es beispielsweise einen Identifizierungscode bzw. eine Identifizierungskennung 51 am Objekt auswertet. Bei der Identifizierungskennung 51 handelt es sich beispielsweise um einen Datamatrix-Code, einen Bar-Code oder dergleichen. Das Analysemodul 46 kann z.B. anhand der Bilddaten 43 auch Objektmerkmale des Objektes 32 auswerten, um die Identität des Objektes 32 zu ermitteln.

Das Analysemodul 46 kann weitere Eigenschaften des Objekts 32 ermitteln, beispielsweise dessen Lage, dessen Maße, dessen Abstände von einem oder mehreren Hindernissen sowie dessen Oberflächenqualität. Die vorgenannten Analysedaten, die beispielsweise eine Teilenummer, einen Identifizierungscode, Vermessungsdaten, Abstandsdaten, Ausrichtungsdaten/Lagedaten und/oder Oberflächendaten enthalten, kann die Bilderfassungsvorrichtung 13 an die überlagerte Steuerungseinrichtung in Gestalt des Steuerrechners 30 übermitteln.

Das Analysemodul 46 ist jedoch auch in der Lage eine oder mehrere dynamische Eigenschaften des Objekts 32 an mindestens einer Position entlang der Bewegungsbahn 36 zu analysieren und eine Folgereaktion auszulösen, beispielsweise eine Warninformation in der Art der Warninformation 36 zu versenden. Eine solche dynamische Eigenschaft ist beispielsweise durch den Weg-Verlauf 65 oder den Geschwindigkeitsverlauf 84 repräsentiert.

Bei dem Analysemodul 46 ist beispielsweise parametriert, dass der zeitabhängige Weg-Verlauf des Objekts 32 entlang der Bewegungsbahn 36 sich innerhalb eines Toleranzbandes 67 bewegen muss, dass durch einen unteren und einen oberen Grenzverlauf 68, 69 begrenzt ist. Ein typischer Weg-Zeit-Verlauf 66 ist in Figur 4 mit einer durchgezogenen Linie dargestellt. Es ist aber möglich, dass der Weg-Zeit-Verlauf fehlerhaft verläuft, was durch eine punktierte Linie 70 angedeutet ist. Die punktierte Linie 70 verlässt das Toleranzband 67 nach oben. Dementsprechend sendet das Analysemodul 46 beispielsweise eine Warninformation in der Art der Warninformation 61 an das Steuermodul 47, worauf dieses die Aktoren 16 bis 18 zu einer korrigierten Handhabung des Objekts 32 ansteuert.

Es ist aber auch möglich, dass mehrere Toleranzbänder, beispielsweise ein Alarm-Toleranzband 79 und ein Not-Toleranzband 86 für die Geschwindigkeit des Objekts 32 entlang der Bewegungsbahn 36 definiert sind. Beim Überschreiten des Alarm-Geschwindigkeitstoleranzbandes 79, das durch einen unteren und einen oberen Grenzverlauf 80, 81 begrenzt ist, sendet das Analysemodul 46 beispielsweise eine Alarm-Meldung 77 an den Steuer-Rechner 30. Ein solche Überschreitung ist beispielsweise durch den Fehler-Geschwindigkeitsverlauf 85 gegeben, der eine Alarm-Geschwindigkeit 75 erreicht.

Wenn das Objekt 32 entlang der Bewegungsbahn 36 noch schneller bewegt wird oder unvorgesehen langsam bewegt wird, verlässt sein Geschwindigkeitsverlauf auch das Not-Toleranzband 86 und erreicht beispielsweise die Not-Geschwindigkeit 76. In diesem Fall sendet das Analysemodul 46 eine Not-Meldung 78 an das Steuermodul 47. Bei Eingang der Not-Meldung 78 hält das Steuermodul 47 beispielsweise die Aktoren 16, 17, 18 unmittelbar an. Das Steuermodul 47 sendet dann beispielsweise einen Haltebefehl 74 an die Steuermodule 25, 26 der Ventilbatterien 14, 15 um diese zu einem Anhalten der Aktoren 16 bis 18 zu instruieren.

Eine Visualisierungs-/Parametrierungsvorrichtung 102 in Gestalt eines Personal-Computers dient zur Visualisierung von Visualisierungsdaten 50, die das Visualisierungsmodul 48 erzeugt. Ferner ermöglicht die Vorrichtung 102 eine Parametrierung der Parameterdaten 52 an einer Parametrierschnittstelle 53. Die Bilderfassungsvorrichtung 13 und die Visualisierungs-/Parametriervorrichtung 102 kommunizieren über eine drahtlose Verbindung, beispielsweise eine WLAN-Verbindung. Die Parametrierschnittstelle 53 enthält beispielsweise einen Funkcontroller. Die Parametrier-Schnittstelle 53 ist beim Ausführungsbeispiel zugleich eine Visualisierungsschnittstelle zur Ausgabe der Visualisierungsdaten 50, die beispielsweise eine Bildsequenz 93 enthalten, die eine Bewegung des Objekts 32 entlang der Bewegungsbahn 36 zeigt.

Die Bildsequenz 93 sowie die Parameterdaten 52 sind in einem Speicher 92 abgelegt, der über eine nicht dargestellte Verbindung mit dem Prozessor 44 verbunden ist. In dem Speicher 92 sind in nicht dargestellter Weise auch die Programmmodule 45 abgelegt und können vom Prozessor 44 zur Ausführung von deren Programmcode aus dem Speicher 92 ausgelesen werden.

Die Parametrier-Schnittstelle 53 ist als eine Art Web-Server ausgestaltet, das heißt sie stellt die Visualisierungsdaten 50 beispielsweise als Multimedia-Daten bereit, zweckmäßigerweise eingebettet in Code einer Seitenbeschreibungssprache, z.B. HTML (Hypertext Markup Language).

Der Speicher 92 ist zur Langzeitspeicherung von Bildsequenzen ausgestaltet, beispielsweise der Bildsequenz 93. Üblicherweise werden im Speicher 92 gespeicherte Bildsequenzen wieder gelöscht, wobei beispielsweise die jeweils ältesten Bilddaten durch aktuelle Bilddaten ersetzt werden. In Abhängigkeit von einer Auslösebedingung, beispielsweise einem Alarm-Zustand oder einem Notzustand (wenn z.B. das Not-Toleranzband 86 verlassen wird) speichert die Bilderfassungsvorrichtung 13 die Bildsequenz 92 in einem Langzeit-Speicherbereich des Speicher 92. Aus diesem Langzeit-Speicherbereich kann die jeweilige Bildsequenz für eine spätere Analyse beispielsweise mit Hilfe der Visualisierungsvorrichtung 102, ausgelesen werden. Diese Funktion ist insbesondere bei der Inbetriebnahme der Handhabungsvorrichtungen 11, 12 vorteilhaft, wobei aber auch im laufenden Betrieb eine Speicherung von Bildsequenzen sinnvoll ist. An dieser Stelle sei festgehalten, dass die Bilderfassungsvorrichtung 13 für schnelle Bewegungsvorgänge geeignet ist, das heißt sie kann sozusagen in Zeitlupe Bildsequenzen erfassen und zu späteren Analyse wieder ausgeben.

In den Figuren 2 und 3 sind Schnittstellenmittel 105 der Bilderfassungsvorrichtung 13 teilweise dargestellt. An einem Anschluss 94, beispielsweise einem Steckanschluss, ist die Einspeisung von Strom in die Bilderfassungsvorrichtung 13 möglich. Ein weiterer Anschluss 95, der zweckmäßigerweise ebenfalls ein Steckanschluss ist, wird von einem Bus-Controller 96 bedient und dient zum Anschluss des Feldbusses 27. Eine Digital-Analog-Wandleranordnung oder Analog-Digital-Wandleranordnung 98 ist einem Ein-Ausgabesteckanschluss 97 zugeordnet und ermöglicht beispielsweise das Einschalten und/oder Dimmen der Beleuchtungseinrichtung 104 und/oder den Anschluss externer Sensorik, beispielsweise eines Positionssensors 87 am Aktor 16. Der Positionssensor 87 sendet ein digitales oder analoges Positionssignal 88 an die Bilderfassungsvorrichtung 13, das die Position, beispielsweise die Endlage, des Aktorglieds 22 signalisiert. Das Steuermodul 47 kann das Positionssignal 88 zur Ansteuerung der Aktoren 16 bis 18, insbesondere zur Ansteuerung des Aktors 16, auswerten.

Ein Ethernet-Controller 100 bedient einen Ethernet-Anschluss 99, beispielsweise in Gestalt eines RJ-45-Steckers, zum Anschluss an den Steuerbus 29. Es versteht sich, dass auch andere Busse als Ethernet sowie verschiedene drahtgebundene und drahtlose Verbindungsarten möglich sind.

Anzeigemittel 101, beispielsweise LEDs signalisieren Betriebszustände der Bilderfassungsvorrichtung 13, beispielsweise Normalbetrieb, Störungsfall, Notaus.

Die Anschlüsse 94, 95, 97 sind zweckmäßigerweise in einer hohen Schutzart beispielsweise IP 65/67 realisiert.

Die erfindungsgemäße Bilderfassungsvorrichtung kann in Software und/oder Hardware realisiert sein.

Die Bilderfassungsvorrichtung 13 kann auch ein Gateway zwischen dem Feldbus 27 und dem überlagerten Steuerbus 29 bilden und beispielsweise Meldungen der Steuermodule 25, 26 auf dem Bus 27 in Meldungen auf dem Bus 29 transformieren und/oder in umgekehrter Richtung Steuerbefehle des Steuer-Rechners 30 auf dem Bus 29 als Steuerbefehle auf dem Bus 27 ausgeben.

## Patentansprüche

1. Bilderfassungsvorrichtung in Gestalt einer Kamera zur Erfassung von Bilddaten (43, 90) eines durch mindestens einen Aktor (16, 17, 18) entlang einer Bewegungsbahn (36) bewegten Objekts (32), **dadurch gekennzeichnet, dass** die Kamera Steuermittel (47) zur Steuerung des mindestens einen Aktors (16, 17, 18) aufweist, und dass die Steuermittel (47) über eine Programmier-Schnittstelle programmierbar sind, wobei mindestens ein Bewegungsablauf des mindestens einen Aktors (16, 17, 18) programmierbar ist.

2. Bilderfassungsvorrichtung nach Anspruch 1, **dadurch gekennzeichnet**, die Steuermittel (47) zur Erfassung von durch den mindestens einen Aktor (16, 17, 18) und/oder durch mindestens einen Sensor (87) gemeldete Rückmeldungen ausgestaltet sind.

3. Bilderfassungsvorrichtung nach einem der vorhergehenden Ansprüche, **dadurch gekennzeichnet, dass** die Steuermittel (47) mit einer standardisierten Programmiersprache programmierbar sind.

4. Bilderfassungsvorrichtung nach einem der vorhergehenden Ansprüche, **dadurch gekennzeichnet, dass** die Steuermittel (47) als eine Speicherprogrammierbare Steuerung aufgebaut sind und/oder in der Art einer Speicherprogrammierbaren Steuerung funktionieren.

5. Bilderfassungsvorrichtung nach einem der vorhergehenden Ansprüche, **dadurch gekennzeichnet, dass** die Steuermittel (47) zur direkten oder indirekten Kommunikation mit dem mindestens einen Aktor (16, 17, 18) ausgestaltet sind.

6. Bilderfassungsvorrichtung nach Anspruch 5, **dadurch gekennzeichnet, dass** die Steuermittel (47) zu der indirekten Kommunikation mit einem mindestens einem unterlagerten, von der Kamera separaten Eingabe-/Ausgabemodul (25, 26) zum Empfang von Meldungen bzw. zur Ausgabe von Steuerungsbefehlen an den mindestens einen Aktor (16, 17, 18) kommunizieren.

7. Bilderfassungsvorrichtung nach einem der vorhergehenden Ansprüche, **dadurch gekennzeichnet, dass** sie Web-Schnittstellenmittel zur Eingabe und/oder Ausgabe von Daten in einer Seitenbeschreibungssprache aufweist.

8. Bilderfassungsvorrichtung nach Anspruch 6, **dadurch gekennzeichnet, dass** die Web-Schnittstellenmittel eine Programmier-Schnittstelle zur Programmierung der Steuermittel (47) bilden.

9. Bilderfassungsvorrichtung nach einem der vorhergehenden Ansprüche, **dadurch gekennzeichnet, dass** sie mindestens eine Bus-Schnittstelle (96), insbesondere eine Feldbus-Schnittstelle, zum Anschluss des mindestens einen Aktors (16, 17, 18) oder eines Eingabe-/Ausgabemoduls (25, 26) zur Ansteuerung des Aktors (16, 17, 18) aufweist.

10. Bilderfassungsvorrichtung nach Anspruch 9, **dadurch gekennzeichnet, dass** sie einen Ethernet-Gateway für die mindestens eine Bus-Schnittstelle (96) bildet, wobei die Kamera an der Bus-Schnittstelle empfangene Meldungen an einer Ethernet-Schnittstelle (100) ausgibt und an der Ethernet-Schnittstelle empfangene Meldungen an der Bus-Schnittstelle ausgibt.

11. Bilderfassungsvorrichtung nach einem der vorhergehenden Ansprüche, **dadurch gekennzeichnet, dass** sie Anschlussmittel (53) für eine Visualisierungsvorrichtung (102) aufweist und/oder Visualisierungsmittel (48) enthält.

12. Bilderfassungsvorrichtung nach einem der vorhergehenden Ansprüche, **dadurch gekennzeichnet, dass** sie von einer überlagerten Steuerungsvorrichtung (30) steuerbar ist.

13. Bilderfassungsvorrichtung nach einem der vorhergehenden Ansprüche, **dadurch gekennzeichnet, dass** sie Erfassungsmittel (42) zum Erfassen von Bilddaten (43, 90) eines insbesondere durch den mindestens einen Aktor (16, 17, 18) bewegten Objekts (32) an mehreren Positionen einer Bewegungsbahn (36) aufweist.

14. Bilderfassungsvorrichtung nach einem der vorhergehenden Ansprüche, **dadurch gekennzeichnet, dass** sie Speichermittel zur Speicherung der Bilddaten (43, 90), insbesondere von Bildsequenzen, aufweist.

15. Bilderfassungsvorrichtung nach einem der vorhergehenden Ansprüche, **dadurch gekennzeichnet, dass** sie Analysemittel (46) zum Ermitteln von Bildanalysedaten (49) des Objektes (32) anhand der Bilddaten (43, 90) aufweist.

16. Bilderfassungsvorrichtung nach Anspruch 15, **dadurch gekennzeichnet, dass** die Bildanalysedaten (49) Qualitätsdaten des bewegten Objekts (32) enthalten.

17. Bilderfassungsvorrichtung nach Anspruch 15 oder 16, **dadurch gekennzeichnet, dass** die Analysemittel (46) zum Erzeugen der Bildanalysedaten (49) anhand einer geometrischen und/oder einer dynamischen Analyse einer Bewegungsbahn (36) des bewegten Objekts (32) ausgestaltet sind.

18. Bilderfässungsvorrichtung nach einem der vorhergehenden Ansprüche, **dadurch gekennzeichnet, dass** die Analysemittel (46) und/oder die Erfassungsmittel und/oder die Steuermittel (47) zumindest teilweise durch einen Prozessor (44) zur Bilddatenverarbeitung gebildet sind.

19. Bilderfassungsvorrichtung nach einem der Ansprüche 15 bis 18, **dadurch gekennzeichnet, dass** die Erfassungsmittel und/oder die Steuermittel (47) zur Erzeugung von Steuerungsdaten anhand der Bildanalysedaten (49) ausgestaltet sind.

20. Bilderfassungsvorrichtung nach einem der vorhergehenden Ansprüche, **dadurch gekennzeichnet, dass** sie durch einen Prozessor (44) ausführbaren Programmcode enthält.

21. Steuermodul für eine Bilderfassungsvorrichtung in Gestalt einer Kamera zur Erfassung von Bilddaten (43, 90) eines durch mindestens einen Aktor (16, 17, 18) entlang einer Bewegungsbahn (36) bewegten Objekts (32) nach einem der vorhergehenden Ansprüche, wobei das Steuermodul durch Steuermittel (47) zur Steuerung des mindestens einen Aktors (16, 17, 18) gebildet ist, die durch Programmcode gebildet sind, der durch einen Prozessor (44) der Bilderfassungsvorrichtung ausführbar ist, und wobei die Steuermittel (47) über die Programmier-Schnittstelle der Kamera zur Programmierung mindestens eines Bewegungsablauf des mindestens einen Aktors (16, 17, 18) programmierbar sind.

22. Steuermodul nach Anspruch 21, **dadurch gekennzeichnet, dass** es auf einem Speichermittel gespeichert ist.

## Claims

1. Image acquisition device in form of a camera for the acquisition of image data (43, 90) of an object (32) moved along a path of motion (36) by at least one actuator (16, 17, 18), **characterised in that** the camera comprises control means (47) for the control of the at least one actuator (16, 17, 18) and **in that** the control means (47) are programmable via at least one programming interface, wherein at least one sequence of motions of the at least one actuator (16, 17, 18) is programmable.

2. Image acquisition device according to claim 1, **characterised in that** the control means (47) are designed for the acquisition of feedback from the at least one actuator (16, 17, 18) and/or from at least one sensor (87).

3. Image acquisition device according to any of the preceding claims, **characterised in that** the control means (47) are programmable using a standardised programming language.

4. Image acquisition device according to any of the preceding claims, **characterised in that** the control means (47) are designed as a programmable logic controller and/or operate in the manner of a programmable logic controller.

5. Image acquisition device according to any of the preceding claims, **characterised in that** the control means (47) are designed for direct or indirect communication with the at least one actuator (16, 17, 18).

6. Image acquisition device according to claim 5, **characterised in that** the control means (47) communicate for indirect communication with at least one subordinate input/output module (25, 26) separate from the camera and designed for receiving messages and for outputting control instructions to the at least one actuator (16, 17, 18).

7. Image acquisition device according to any of the preceding claims, **characterised in that** it comprises web interface means for inputting and/or outputting data in a page description language.

8. Image acquisition device according to claim 6, **characterised in that** the web interface means form a programming interface for programming the control means (47).

9. Image acquisition device according to any of the preceding claims, **characterised in that** it comprises at least one bus interface (96), in particular a field bus interface, for the connection of the at least one actuator (16, 17, 18) or of an input/output module (25, 26) for driving the actuator (16, 17, 18).

10. Image acquisition device according to claim 9, **characterised in that** it forms an Ethernet gateway for the at least one bus interface (96), wherein the camera outputs messages received at the bus interface to an Ethernet interface (100) and messages received at the Ethernet interface to the bus interface.

11. Image acquisition device according to any of the preceding claims, **characterised in that** it includes connecting means (53) for a visualisation device (102) and/or visualisation means (48).

12. Image acquisition device according to any of the preceding claims, **characterised in that** it is controllable by a superimposed control unit (30).

13. Image acquisition device according to any of the preceding claims, **characterised in that** it comprises acquisition means (42) for the acquisition of image data (43, 90) of an object (32) moved in particular by the at least one actuator (16, 17, 18) at several positions of a path of motion (36).

14. Image acquisition device according to any of the preceding claims, **characterised in that** it comprises memory means for the storage of image data (43, 90), in particular image sequences.

15. Image acquisition device according to any of the preceding claims, **characterised in that** it comprises analysing means (46) for obtaining image analysis data (49) of the object (32) by means of the image data (43, 90).

16. Image acquisition device according to claim 15, **characterised in that** the image analysis data (49) include quality data of the moving object (32).

17. Image acquisition device according to claim 15 or 16, **characterised in that** the analysing means (46) are designed for the generation of the image analysis data (49) by means of a geometrical and/or dynamic analysis of the path of motion (36).

18. Image acquisition device according to any of the preceding claims, **characterised in that** the analysing means (46) and/or the acquisition means and/or the control means (47) are at least partially represented by a processor (44) for image data processing.

19. Image acquisition device according to any of claims 15 to 18, **characterised in that** the acquisition means and/or the control means (47) are designed for the generation of control data by means of the image analysis data (49).

20. Image acquisition device according to any of the preceding claims, **characterised in that** it includes a programme code executable by a processor (44).

21. Control module for an image acquisition device in form of a camera for the acquisition of image data (43, 90) of an object (32) moved along a path of motion (36) by at least one actuator (16, 17, 18) according to any of the preceding claims, wherein the control module is represented by control means (47) for the control of the at least one actuator (16, 17, 18), these being represented by a programme code executable by a processor (44) of the image acquisition device, and wherein the control means (47) are programmable via the programming interface of the camera for programming at least one motion sequence of the at least one actuator (16, 17, 18).

22. Control module according to claim 21, **characterised in that** it is stored on memory means.

## Revendications

1. Dispositif d'acquisition d'image sous la forme d'une caméra pour acquérir des données d'image (43, 90) d'un objet (32) déplacé par au moins un actionneur (16, 17, 18) le long d'une trajectoire de déplacement (36), **caractérisé en ce que** la caméra présente des moyens de commande (47) pour commander l'actionneur (16, 17, 18) au nombre d'au moins un, et **en ce que** les moyens de commande (47) sont programmables par l'intermédiaire d'une interface de programmation, au moins une séquence de déplacement de l'actionneur (16, 17, 18) au nombre d'au moins un étant programmable.

2. Dispositif d'acquisition d'image selon la revendication 1, **caractérisé en ce que** les moyens de commande (47) sont configurés pour acquérir des messages de retour envoyés par l'actionneur (16, 17, 18) au nombre d'au moins un et/ou par au moins un capteur (87).

3. Dispositif d'acquisition d'image selon l'une des revendications précédentes, **caractérisé en ce que** les moyens de commande (47) peuvent être programmés avec un langage de programmation standardisé.

4. Dispositif d'acquisition d'image selon l'une des revendications précédentes, **caractérisé en ce que** les moyens de commande (47) sont construits sous la forme d'une commande à mémoire programmable et/ou fonctionnent à la manière d'une commande à mémoire programmable.

5. Dispositif d'acquisition d'image selon l'une des revendications précédentes, **caractérisé en ce que** les moyens de commande (47) sont conformés pour une communication directe ou indirecte avec l'actionneur (16, 17, 18) au nombre d'au moins un.

6. Dispositif d'acquisition d'image selon la revendication 5, **caractérisé en ce que** les moyens de commande (47) communiquent pour la communication indirecte avec au moins un module d'entrée/sortie (25, 26) subordonné séparé de la caméra, afin de recevoir des messages ou d'envoyer des ordres de commande à l'actionneur (16, 17, 18) au nombre d'au moins un.

7. Dispositif d'acquisition d'image selon l'une des revendications précédentes, **caractérisé en ce qu'**il présente des moyens d'interface Web pour entrer et/ou sortir des données dans un langage de description de pages.

8. Dispositif d'acquisition d'image selon la revendication 6, **caractérisé en ce que** les moyens d'interface Web forment une interface de programmation pour programmer les moyens de commande (47).

9. Dispositif d'acquisition d'image selon l'une des revendications précédentes, **caractérisé en ce qu'**il présente au moins une interface de bus (96), en particulier une interface de bus de terrain, pour le raccordement de l'actionneur (16, 17, 18) au nombre d'au moins un ou d'un module d'entrée/sortie (25, 26) prévu pour commander l'actionneur (16, 17, 18).

10. Dispositif d'acquisition d'image selon la revendication 9, **caractérisé en ce qu'**il forme une passerelle Ethernet pour l'interface de bus (96) au nombre d'au moins une, la caméra délivrant à une interface Ethernet (100) des messages reçus sur l'interface de bus et délivrant à l'interface de bus les messages reçus sur l'interface Ethernet.

11. Dispositif d'acquisition d'image selon l'une des revendications précédentes, **caractérisé en ce qu'**il présente des moyens de raccordement (53) pour un dispositif de visualisation (102) et/ou contient des moyens de visualisation (48).

12. Dispositif d'acquisition d'image selon l'une des revendications précédentes, **caractérisé en ce qu'**il peut être commandé par un dispositif de commande (30) de niveau supérieur.

13. Dispositif d'acquisition d'image selon l'une des revendications précédentes, **caractérisé en ce qu'**il présente des moyens d'acquisition (42) pour acquérir des données d'image (43, 90) d'un objet (32) déplacé en particulier par l'actionneur (16, 17, 18) au nombre d'au moins un en plusieurs positions d'une trajectoire de déplacement (36).

14. Dispositif d'acquisition d'image selon l'une des revendications précédentes, **caractérisé en ce qu'**il présente des moyens de mémorisation pour mémoriser les données d'image (43, 90), en particulier des séquences d'images.

15. Dispositif d'acquisition d'image selon l'une des revendications précédentes, **caractérisé en ce qu'**il présente des moyens d'analyse (46) pour déterminer des données d'analyse d'image (49) de l'objet (32) à l'aide des données d'image (43, 90).

16. Dispositif d'acquisition d'image selon la revendication 15, **caractérisé en ce que** les données d'analyse d'image (49) contiennent des données de qualité de l'objet (32) déplacé.

17. Dispositif d'acquisition d'image selon la revendication 15 ou 16, **caractérisé en ce que** les moyens d'analyse (46) sont configurés pour produire les données d'analyse d'image (49) à l'aide d'une analyse géométrique et/ou d'une analyse dynamique d'une trajectoire de déplacement (36) de l'objet (32) déplacé.

18. Dispositif d'acquisition d'image selon l'une des revendications précédentes, **caractérisé en ce que** les moyens d'analyse (46) et/ou les moyens de détection et/ou les moyens de commande (47) sont formés au moins partiellement par un processeur (44) pour le traitement des données d'image.

19. Dispositif d'acquisition d'image selon l'une des revendications 15 à 18, **caractérisé en ce que** les moyens de détection et/ou les moyens de commande (47) sont conformés pour produire des données de commande à l'aide des données d'analyse d'image (49).

20. Dispositif d'acquisition d'image selon l'une des revendications précédentes, **caractérisé en ce qu'**il contient un code de programme pouvant être exécuté par un processeur (44).

21. Module de commande pour un dispositif d'acquisition d'image sous la forme d'une caméra pour acquérir des données d'image (43, 90) d'un objet (32) déplacé par au moins un actionneur (16, 17, 18) le long d'une trajectoire de déplacement (36) selon l'une des revendications précédentes, le module de commande étant formé par des moyens de commande (47) pour commander l'actionneur (16, 17, 18) au nombre d'au moins un, qui sont formés par un code de programmation qui peut être exécuté par un processeur (44) du dispositif d'acquisition d'image, et les moyens de commande (47) pouvant être programmés par l'intermédiaire de l'interface de programmation de la caméra pour programmer au moins une séquence de déplacement de l'actionneur (16, 17, 18) au nombre d'au moins un.

22. Module de commande selon la revendication 21, **caractérisé en ce qu'**il est enregistré sur un moyen d'enregistrement.
